# EUROPÄISCHE PATENTSCHRIFT

(11) **EP 3 114 381 B1**
(45) Veröffentlichungstag und Bekanntmachung des Hinweises auf die Patenterteilung: **13.06.2018**
(21) Anmeldenummer: 15707873.4
(22) Anmeldetag: 24.02.2015
(51) Int. Cl.: F16K 31/06

(54) **MAGNETVENTIL**
SOLENOID VALVE
MAGNETVENTIL

(30) Priorität: 06.03.2014 DE 102014003381
(43) Veröffentlichungstag der Anmeldung: 11.01.2017
(73) Patentinhaber: WABCO GmbH, 30453 Hannover (DE)
(72) Erfinder: BÜRGER, Jörg, 31535 Neustadt (DE); SIEKER, Armin, 33611 Bielefeld (DE); TEICHMANN, Andreas, 30916 Isernhagen (DE)
(74) Vertreter: Lauerwald, Jörg
(86) Internationale Anmeldenummer: PCT/EP2015/000420
(87) Internationale Veröffentlichungsnummer: WO 2015/131983

(56) Entgegenhaltungen:
- EP-A2- 1 353 103
- WO-A1-2008/034524
- WO-A1-2009/106080
- DE-A1- 4 310 960
- DE-C1- 19 933 329
- US-A- 5 251 667

## Beschreibung

Die Erfindung betrifft ein Magnetventil, mit Kern, Joch, Ventilkammer, einem Einlassanker vor einem Einlass der Ventilkammer, einem Auslassanker vor einem ersten Auslass der Ventilkammer und mit einem zweiten Auslass an der Ventilkammer, wobei Einlassanker und Auslassanker insbesondere koaxial bewegbar sind und Einlass und erster Auslass einander gegenüberliegen. Derartige Magnetventile werden insbesondere als Steuerventile, nämlich zur Bereitstellung eines Steuerdrucks für nachfolgende Relaisventile verwendet. Derartig kombinierte Ventile finden sich beispielsweise in Bremssystemen mit Antiblockierfunktion. Insbesondere handelt es sich um pneumatische Magnetventile.

Aus der DE 43 10 960 A1 ist ein Magnetventil bekannt, welches aus einem Fluidvorrat unter Druck gespeist wird und bei dem der Einlassanker und ein hierzu koaxial angeordneter Auslassanker federbelastet sind. Zum Schließen des Einlassankers muss die Federkraft überwunden werden. Zur Betätigung der Anker sind zwei zueinander konzentrisch angeordnete Magnetspulen mit Strom beaufschlagbar. Die Spulen sind getrennt und aufwendig einzeln ansteuerbar. Der Auslassanker ist topfförmig ausgebildet und nimmt den zylindrischen Einlassanker abschnittsweise in sich auf.

Aufgabe der vorliegenden Erfindung ist die Schaffung eines Magnetventils mit verbesserter Funktion. Insbesondere soll ein geringerer Energieverbrauch möglich sein.

Zur Lösung der Aufgabe weist das erfindungsgemäße Magnetventil die Merkmale des Anspruchs 1 auf. Einlass und zweiter Auslass sind über ein Ausgleichssystem mit Rückschlagventil miteinander verbunden. Dabei ist das Rückschlagventil in einer Ausgleichsleitung so angeordnet, dass eine Strömung in Richtung auf den Einlass möglich ist. In Gegenrichtung sperrt das Rückschlagventil. Das Rückschlagventil regelt somit die Strömung parallel zur Strömung in der Ventilkammer. Dadurch ist eine Feder zum Offenhalten des Einlassankers im unbestromten Zustand des Magnetventils nicht mehr erforderlich. Ein höherer Druck in der Ventilkammer gegenüber einem niedrigeren Druck vor dem Einlass wird über das Ausgleichssystem ausgeglichen. Durch die fehlende Feder für den Einlassanker verbraucht das Magnetventil im Betrieb weniger Energie.

Vorzugsweise ist der Auslassanker federbelastet, insbesondere derart, dass der erste Auslass gesperrt ist, solange das Magnetventil nicht bestromt wird. Dem Einlass ist in Strömungsrichtung ein Einlasskanal vorgeordnet, welcher zum Teil in einem Spulenkern verläuft. An den Einlasskanal schließt stromaufwärts ein Einlassport zum Anschluss einer Druckleitung an. Die Ausgleichsleitung geht vom Einlasskanal ab und führt ebenso wie eine vom ersten Auslass kommende Leitung zu einer Steuerkammer. Die Steuerkammer liefert den Druck für ein angeschlossenes Relaisventil und kann Bestandteil des Ausgleichssystems sein.

Das Magnetventil weist aufgrund der möglichen Positionen von Einlassanker und Auslassanker drei verschiedene Zustände auf. In einem ersten Zustand wird das Magnetventil nicht bestromt. Der Auslassanker verschließt den ersten Auslass. Der zweite Auslass ist permanent offen. Der Einlass ist unverschlossen. Entsprechend stellt sich eine Fluid-Strömung vom Einlass zum zweiten Auslass ein. In einem zweiten Zustand ist das Magnetventil schwach bzw. unterhalb eines Maximums bestromt. Der Einlassanker verschließt den Einlass. Die auf den Auslassanker wirkende elektromagnetische Kraft reicht nicht aus um den ersten Auslass zu öffnen. Der Druck in der Steuerkammer wird somit gehalten. Im dritten Zustand ist das Magnetventil stärker bestromt bzw. mit vollem Strom belegt. Der Einlass ist durch den Einlassanker geschlossen, der Auslassanker hat sich vom ersten Auslass abgehoben, so dass eine Rückströmung von der Steuerkammer über den zweiten Auslass zum ersten Auslass möglich ist. Der Druck in der Steuerkammer nimmt ab. Vorzugsweise ist der Einlassanker an seinem dem Auslassanker zugewandten Ende kegelförmig ausgebildet, wobei der Auslassanker ein hierzu korrespondierendes Ende mit Innenkegel aufweist. Durch die Kegelformen sind Auslassanker und Einlassanker während der voranstehend beschriebenen Zustände 1 und 3 gegeneinander zentriert. Insbesondere liegen Kegelmäntel von Einlassanker einerseits und Auslassanker andererseits zumindest teilweise aneinander an. Dies ermöglicht einen energetisch günstigeren Verlauf der magnetischen Feldlinien bei voller Bestromung des Magnetventils, was einen geringeren Energieverbrauch ermöglicht.
Vorteilhafterweise ist das Magnetventil gekennzeichnet durch wenigstens eine Magnetspule und mit zu einem Spulenkern queraxial angeordneten Jochschenkeln eines vorzugsweise C-förmigen Jochs, derart, dass eine gedachte Fortsetzungslinie eines der Jochschenkel den Auslassanker bei verschlossenem ersten Auslass im Bereich eines Innenkegelmantels schneidet. Somit liegt der Jochschenkel etwa auf Höhe des dem Auslassanker zugeordneten Innenkegelmantels. Bei offenem ersten Auslass erstreckt sich der Jochschenkel vorzugsweise im Bereich einer Innenkegelsohle. Analog gilt dies vorzugsweise für die verschiedenen Positionen des Einlassankers. Bei verschlossenem Einlass liegt der Jochschenkel etwa auf der Höhe einer Kegelspitze des Einlassankers, bei offenem Einlass im Bereich eines Kegelmantels des Einlassankers. Der vom Jochschenkel ausgehende magnetische Fluss tritt nahezu queraxial in den Auslassanker ein. Vorzugsweise ist zum Bewegen von Einlassanker und Auslassanker genau eine Spule vorgesehen. Deren Strom ist regelbar insbesondere mit den drei Werten kein Strom, geringer Strom, voller Strom. Der apparative Aufwand ist dadurch deutlich geringer als bei einer Lösung mit zwei konzentrisch ineinander angeordneten Spulen.

Die vorzugsweise voneinander unabhängigen Gedanken der Erfindung können auch in beliebiger Weise miteinander und mit den weiteren Merkmalen kombiniert werden.
Vorteilhafterweise ist der Auslassanker federbelastet und schließt den ersten Auslass im stromlosen Zustand des Magnetventils. Insbesondere ist nur der Auslassanker federbelastet.

Nach einem weiteren Gedanken der Erfindung sind Einlassanker und Auslassanker jeweils federbelastet, derart dass ohne Stromzufuhr der Auslass geschlossen ist und der Einlass offen ist, und dass bei voller Stromzufuhr der Einlass geschlossen ist und der Auslass offen.

In Fortbildung der Erfindung kann ein anti-magnetisches Distanzstück zwischen Einlassanker und Auslassanker vorgesehen sein. Dadurch ergibt sich für den magnetischen Fluss zwischen Einlassanker und Auslassanker ein Luftspalt, was ein leichteres Lösen des Auslassankers vom Einlassanker ermöglicht. Dies ist vorteilhaft für den Übergang von der vollen Bestromung/abnehmendem Druck in der Steuerkammer zur Teilbestromung/Druck halten. Insbesondere ist das Distanzstück im Bereich einer Spitze des Einlassankers bzw. an einer dem Auslassanker zugewandten Fläche vorgesehen. Der Luftspalt kann sich über den gesamten Bereich zwischen Einlassanker und Auslassanker erstrecken. Möglich ist aber auch eine Ausführung bei der zumindest eine teilweise Anlage von Außenflächen des Einlassankers an Innenflächen des Auslassankers möglich bleibt.

Nach einem weiteren Gedanken der Erfindung ist eine Anordnung und Ausbildung von Spulenkern, Einlassanker und Auslassanker derart vorgesehen, dass zwischen Spulenkern und Auslassanker stets ein Abstand besteht. Der Auslassanker hat in keiner Position Kontakt mit dem Spulenkern. Erreicht wird dies beispielsweise durch entsprechende geometrische Gestaltung von Einlassanker und Auslassanker und/oder durch ein Distanzstück zwischen einem der Anker und dem Spulenkern. Ohnehin ist der Einlassanker zwischen Spulenkern und Auslassanker positioniert.

Vorteilhafterweise ist ein anti-magnetisches Distanzstück zwischen Einlassanker und Spulenkern vorgesehen. Insbesondere ist das Distanzstück am Einlassanker angeordnet. Es besteht stets ein Luftspalt zwischen Einlassanker und Spulenkern. Der Einlassanker kann sich leicht vom Spulenkern bzw. vom Einlass lösen.

Eine der bevorzugten Verwendungen des Magnetventils ist die Verwendung als Steuerventil für ein ABS-Relaisventil, etwa in einem Nutzfahrzeug mit pneumatischer Bremsanlage und elektronischem Bremssystem. Möglich ist aber auch die Verwendung in einem hydraulischen Bremssystem.

Weitere Merkmale der Erfindung ergeben sich aus der Beschreibung im Übrigen und aus den Ansprüchen. Vorteilhafte Ausführungsformen der Erfindung werden nachfolgend anhand von Zeichnungen näher erläutert. Es zeigen:
Fig. 1 einen Längsschnitt durch ein Magnetventil,
Fig. 2 einen vereinfachten Längsschnitt einer weiteren Ausführungsform eines Magnetventils in einem stromlosen Zustand,
Fig. 3 das Magnetventil gemäß Fig. 2 mit einem niedrigen anliegenden Strom,
Fig. 4 das Magnetventil gemäß Fig. 2 mit vollem Strom,
Fig. 5 eine weitere Ausführungsform in einem Zustand entsprechend Fig. 4,
Fig. 6 das Magnetventil im Zustand gemäß Fig. 4 mit zusätzlicher Darstellung einer Steuerkammer.

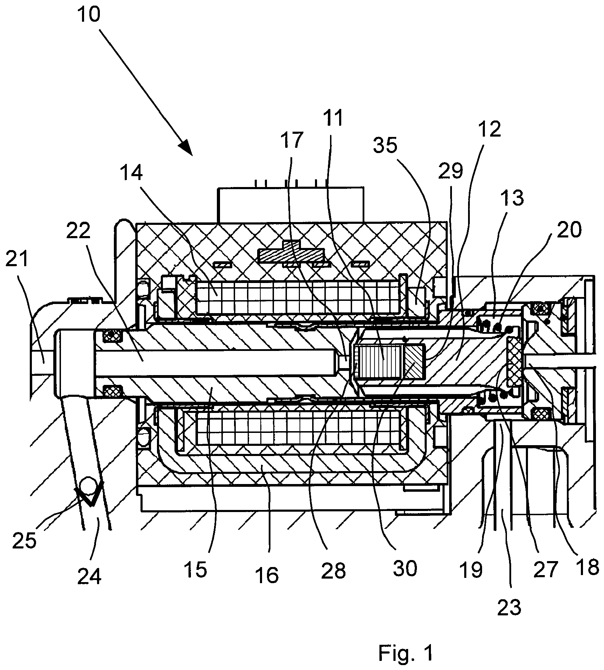

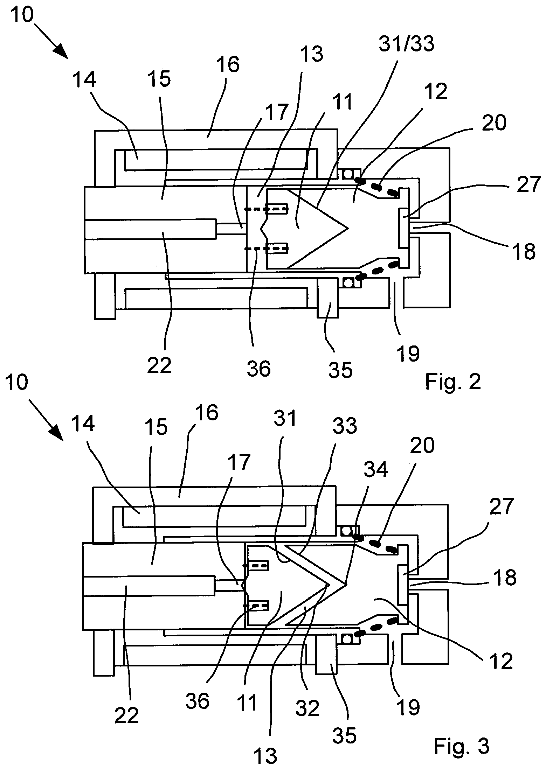

Ein Magnetventil 10 mit Einlassanker 11, Auslassanker 12, Ventilkammer 13, Magnetspule 14, Spulenkern 15, im Querschnitt C-förmigem Joch 16, Einlass 17, erstem Auslass 18 und zweitem Auslass 19 weist drei Zustände auf. In einem ersten Zustand ohne Stromzufuhr ist der erste Auslass 18 durch den Auslassanker 12 verschlossen. Hierzu wird der Auslassanker 12 durch die Kraft einer Feder 20 beaufschlagt. Der Einlass 17 ist offen bzw. undefiniert, da auf den Einlassanker 11 keine Kraft wirkt. Der zweite Auslass 19 ist stets offen. Dieser Zustand ist in Fig. 1 dargestellt, ebenso in Fig. 2.

In einem zweiten Zustand ist der erste Auslass 18 verschlossen, ebenso der Einlass 17. Hierzu ist die Magnetspule 14 mit einem niedrigen Strom beaufschlagt, so dass der Einlassanker 11 den Einlass 17 verschließt. Die durch die Bestromung der Magnetspule 14 erzeugte Kraft reicht aber nicht aus, um den Auslassanker 12 gegen den Druck der Feder 20 zu bewegen. Es ergibt sich der Zustand gemäß Fig. 3.

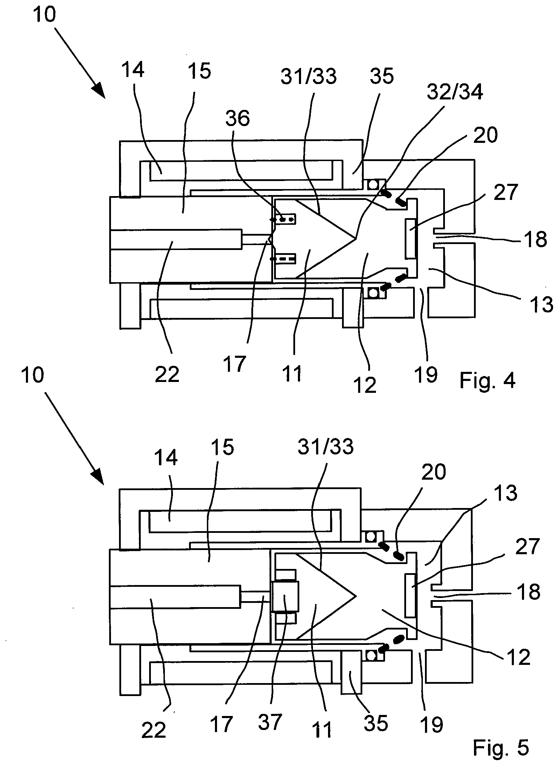

Im dritten Zustand liegt der volle Strom an der Magnetspule 14 an. Einlassanker 11 und Auslassanker 12 sind durch die erzeugte Kraft beide in Richtung auf den Einlass 17 bewegt, siehe Fig. 4. Der Einlass 17 ist verschlossen, während der erste Auslass 18 offenliegt.

Gemäß der hier vorgesehenen Schaltlogik kann im ersten Zustand an einem Einlassport 21 anliegende Druckluft über einen Einlasskanal 22, die Ventilkammer 13 und den zweiten Auslass 19 in eine Leitung 23 gelangen. Das Magnetventil 10 ist im ersten Zustand für die angelegte Druckluft durchgängig.

Im zweiten Zustand wird in der Leitung 23 anstehender Druck gehalten, da Einlassanker 11 und Auslassanker 12 Einlass 17 und ersten Auslass 18 verschließen.

Im dritten Zustand kann in der Leitung 23 anstehender Druck über den zweiten Auslass 19, die Ventilkammer 13 und den ersten Auslass 18 entweichen. Es findet ein Druckabbau in der Leitung 23 statt.

Kritisch ist der Übergang vom zweiten Zustand (Druck halten) zum ersten Zustand (Druck erhöhen/Ventil durchgängig). Der Einlassanker 11 muss hierzu vom Einlass 17 abheben. Unter bestimmten Bedingungen ist der Druck in der Ventilkammer 13 höher als im Einlass 17. Ein Abheben des Einlassankers 11 vom Einlass 17 ist ohne Unterstützung möglich. Um nicht eine zusätzliche Feder einbauen zu müssen, sind der zweite Auslass 19 und der Einlass 17 über ein zur Ventilkammer 13 paralleles Ausgleichssystem, welches hier unter anderem eine Ausgleichsleitung 24 enthält, miteinander verbunden. In der Ausgleichsleitung 24 ist ein Rückschlagventil 25 vorgesehen, welches einen Druckausgleich bei höherem Druck in der Leitung 23 und niedrigerem Druck im Einlasskanal 22 ermöglicht.

Die Leitung 23 führt zu einer Steuerkammer 26, welche den Steuerdruck für das nachfolgende ABS-Relaisventil (nicht gezeigt) liefert. Die Steuerkammer 26 kann in das als Steuerventil wirkende Magnetventil 10 oder in das ABS-Relaisventil integriert sein.

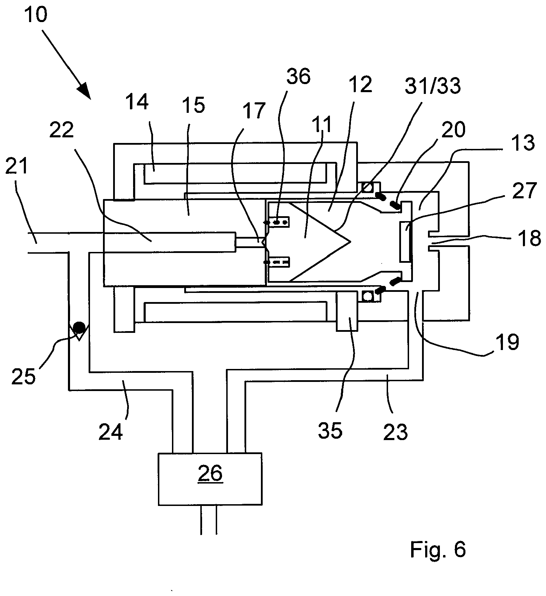

Gemäß Fig. 6 führen die Leitung 23 und die Ausgleichsleitung 24 in die Steuerkammer 26. Möglich ist auch eine direkte Verbindung zwischen den Leitungen 23 und 24 mit einem (nicht gezeigten) Abzweig in die Steuerkammer 26. Die Leitungen 23, 24, das Rückschlagventil 25, der Einlasskanal 22 und gegebenenfalls die Steuerkammer 26 bilden hier das Ausgleichssystem.

In der Ausführung gemäß Fig. 1 weist das Magnetventil einige Besonderheiten auf. Der Auslassanker 12 ist in Richtung auf den ersten Auslass 18, also stirnseitig, mit einem Dichtungsstück 27 versehen, dessen Werkstoff an die Funktion des Abdichtens besonders angepasst ist. Der Einlassanker 11 weist an seinem dem Einlass 17 zugewandten Ende, einer Stirnseite, ein anti-magnetisches Distanzstück 28 auf. Der Auslassanker 12 ist an seinem dem Einlass 17 zugewandten Ende mit einer zylindrischen Vertiefung versehen, auf deren Boden 29 ein anti-magnetisches Distanzstück 30 fixiert ist. Der Einlassanker 11 bewegt sich in der zylindrischen Vertiefung mit geringem Abstand zum Boden 29, ist also im Wesentlichen außenseitig (dreiseitig) vom Auslassanker 12 umschlossen. Der Einlassanker 11 steht leicht über den Auslassanker 12 hervor, so dass letzterer nicht am Spulenkern 15 anliegen kann. Das Distanzstück 28 bewirkt eine Verringerung der verbleibenden magnetischen Kraft (Remanenz) zwischen Einlassanker 11 und Spulenkern 15 und kann zugleich als Dichtungsstück für den Einlass 17 wirken.

In allen Figuren bewegen sich Einlassanker 11 und Auslassanker 12 koaxial entlang einer gedachten Ventillängsachse (nicht gezeigt). Koaxial zur Längsachse sind auch Spulenkern 15, Einlasskanal 22, Einlass 17 und erster Auslass 18 angeordnet.

Eine Besonderheit zeigen auch die Figuren 2 bis 6. Der Einlassanker 11 weist hier eine dem Einlass 17 gegenüberliegende Kegelform mit Kegelmantel 31 und Kegelspitze 32 auf. Analog dazu ist der Auslassanker 12 mit einem Innenkegel versehen, wiederum mit einem Kegelmantel 33 und einer Kegelsohle 34. Die Position des Kegels/Innenkegels ist so vorgesehen, dass ein in diesem Bereich queraxial verlaufender Jochschenkel 35 des C-förmigen Jochs 16 bei geöffnetem erstem Auslass 18 etwa auf Höhe der Kegelspitze 32 bzw. der Kegelsohle 34 liegt, siehe Fig. 4 und 5. Bei geschlossenem erstem Auslass 18, siehe Fig. 2 und 3, verläuft der Jochschenkel 35 etwa auf halber Höhe des Kegelmantels 33. In jedem Fall weist der Auslassanker 12 hier einen deutlichen Abstand zum Spulenkern 15 auf. Dafür entspricht der Durchmesser des Einlassankers 11 nahe dem Spulenkern 15 fast dem Durchmesser des Spulenkerns 15.

Durch die beschriebene kegelförmige Gestaltung und gegebenenfalls in Verbindung mit der Anordnung des Jochschenkels 35 sind die magnetischen Feldlinien im Bereich des Übergangs zwischen Einlassanker 11 und Auslassanker 12 abgewinkelt. In der Folge kann sich der Einlassanker 11 leichter vom Auslassanker 12 lösen, etwa beim Übergang vom ersten Zustand (ohne Strom, Fig. 2) zum zweiten Zustand (wenig Strom, Fig. 3).

In den Fig. 2, 3, 4 und 6 ist der Einlassanker 11 durch eine Feder 36 belastet zum selbstständigen Offenhalten des Einlassankers 11 im stromlosen Zustand. Bei Vorhandensein des Rückstellventils 25 in der Ausgleichsleitung 24 gemäß Fig. 6 kann die Feder 36 auch entfallen. Eine weitere Ausführung ohne Feder 36 zeigt Fig. 5. Hier ist im Einlassanker 11 vor dem Einlass 17 ein insbesondere anti-magnetisches Distanzstück 37 gehalten.

Der Einlassanker 11 weist durch seine Kegelform außerhalb des Distanzstücks 37 noch genügend Volumen für den Durchtritt von Feldlinien in Richtung auf den Spulenkern 15 auf. Das Distanzstück 37 bewirkt, dass ein kleiner Luftspalt zwischen dem Einlassanker 11 und dem Spulenkern 15 besteht. Zugleich wirkt das Distanzstück 37 als Dichtstück für den Einlass 17.

## Patentansprüche

1. Magnetventil (10), mit Spulenkern (15), Joch (16), Ventilkammer (13), einem Einlassanker (11) vor einem Einlass (17) der Ventilkammer (13), einem Auslassanker (12) vor einem ersten Auslass (18) der Ventilkammer (13), und mit einem zweiten Auslass (19) an der Ventilkammer (13), wobei Einlassanker (11) und Auslassanker (12) insbesondere koaxial bewegbar sind und Einlass (17) und erster Auslass (18) einander gegenüberliegen, **dadurch gekennzeichnet, dass** Einlass (17) und zweiter Auslass (19) über ein Ausgleichssystem mit Rückschlagventil (25) miteinander verbunden sind, wobei das Rückschlagventil (25) zum Einlass (17) hin offen ist.

2. Magnetventil (10) nach Anspruch 1, **dadurch gekennzeichnet, dass** der Einlassanker (11) an seinem dem Auslassanker (12) zugewandten Ende kegelförmig ausgebildet ist, und dass der Auslassanker ein hierzu korrespondierendes Ende mit Innenkegel aufweist.

3. Magnetventil nach Anspruch 2, **gekennzeichnet durch** wenigstens eine Magnetspule (14) und mit quer zur Achse eines Spulenkerns (15) angeordneten Jochschenkeln, derart, dass eine gedachte Fortsetzungslinie eines der Jochschenkel (35) den Auslassanker (12) bei verschlossenem erstem Auslass (18) im Bereich eines Kegelmantels (33) schneidet.

4. Magnetventil (10) nach einem der vorhergehenden Ansprüche, **dadurch gekennzeichnet, dass** zum Bewegen von Einlassanker (11) und Auslassanker (12) genau eine Magnetspule (14) vorgesehen ist.

5. Magnetventil nach Anspruch 1 oder einem der weiteren Ansprüche, **dadurch gekennzeichnet, dass** der Auslassanker (12) federbelastet ist und im stromlosen Zustand des Magnetventils den ersten Auslass (18) schließt.

6. Magnetventil nach Anspruch 1 oder einem der weiteren Ansprüche, **dadurch gekennzeichnet, dass** Einlassanker (11) und Auslassanker (12) jeweils federbelastet sind, derart, dass ohne Stromzufuhr der erste Auslass (18) geschlossen ist und der Einlass (17) offen ist, und dass bei voller Stromzufuhr der Einlass (17) geschlossen ist und der erste Auslass (18) offen ist.

7. Magnetventil nach Anspruch 1 oder einem der weiteren Ansprüche, **gekennzeichnet durch** ein anti-magnetisches Distanzstück (30) zwischen Einlassanker (11) und Auslassanker (12).

8. Magnetventil nach Anspruch 1 oder einem der weiteren Ansprüche, **gekennzeichnet durch** eine Anordnung und Ausbildung von Spulenkern (15), Einlassanker (11) und Auslassanker (12) derart, dass zwischen Spulenkern (15) und Auslassanker (12) stets ein Abstand besteht.

9. Magnetventil nach Anspruch 1 oder einem der weiteren Ansprüche, **gekennzeichnet durch** ein anti-magnetisches Distanzstück (28, 37) zwischen Einlassanker (11) und Spulenkern (15).

10. Verwendung des Magnetventils nach einem der voranstehenden Ansprüche 1 bis 9 als Steuerventil für ein ABS-Relaisventil.

## Claims

1. Solenoid valve (10) having a coil core (15), a yoke (16), a valve chamber (13), an inlet armature (11) upstream of an inlet (17) of the valve chamber (13), an outlet armature (12) upstream of a first outlet (18) of the valve chamber (13), and having a second outlet (19) on the valve chamber (13), wherein the inlet armature (11) and the outlet armature (12) can move in particular in a coaxial manner and the inlet (17) and first outlet (18) lie opposite one another, **characterized in that** the inlet (17) and second outlet (19) are connected to one another by way of an equalizing system having a non-return valve (25), wherein the non-return valve (25) is open towards the inlet (17).

2. Solenoid valve (10) according to Claim 1, **characterized in that** the inlet armature (11) is embodied in a tapered manner at its end that is facing the outlet armature (12), and that the outlet armature comprises an end having an inner taper that corresponds to said end of the inlet armature.

3. Solenoid valve according to Claim 2, **characterized by** means of at least one magnetic coil (14) and yoke arms that are arranged in a transverse manner with respect to the axis of a coil core (15) in such a manner that an imaginary projection line of one of the yoke arms (35) intersects the outlet armature (12) in the case of a closed first outlet (18) in the region of a tapered surface (33).

4. Solenoid valve (10) according to any one of the preceding claims, **characterized in that** precisely one magnetic coil (14) is provided so as to move the inlet armature (11) and the outlet armature (12).

5. Solenoid valve according to Claim 1 or any one of the further claims, **characterized in that** the outlet armature (12) is spring-loaded and closes the first outlet (18) in the non-energized state of the solenoid valve.

6. Solenoid valve according to Claim 1 or in any one of the further claims **characterized in that** the inlet armature (11) and outlet armature (12) are in each case spring-loaded in such a manner that the first outlet (18) is closed and the inlet (17) is open when not energized with a current, and that in the case of a full supply of current the inlet (17) is closed and the outlet (18) is open.

7. Solenoid valve according to Claim 1 or any one of the further claims, **characterized by** means of a nonmagnetic spacing piece (30) between the inlet armature (11) and the outlet armature (12).

8. Solenoid valve according to Claim 1 or any one of the further claims, **characterized by** means of an arrangement and embodiment of the coil core (15), the inlet armature (11) and the outlet armature (12) being provided in such a manner that a spacing always occurs between the coil core (15) and the outlet armature (12) .

9. Solenoid valve according to Claim 1 or any one of the further claims, **characterized by** means of a nonmagnetic spacing piece (28, 37) between the inlet armature (11) and the coil core (15).

10. Use of the solenoid valve according to any one of the preceding Claims 1 to 9 as a control valve for an ABS relay valve.

## Revendications

1. Electrovanne (10), comprenant un noyau de bobine (15), un étrier (16), une chambre de soupape (13), un induit d'entrée (11) devant une entrée (17) de la chambre de soupape (13), un induit de sortie (12) devant une première sortie (18) de la chambre de soupape (13), et comprenant une deuxième sortie (19) au niveau de la chambre de soupape (13), l'induit d'entrée (11) et l'induit de sortie (12) étant déplaçables notamment coaxialement et l'entrée (17) et la première sortie (18) étant opposées l'une à l'autre, **caractérisée en ce que** l'entrée (17) et la deuxième sortie (19) sont connectées l'une à l'autre au clapet antiretour (25) par le biais d'un système d'équilibrage, le clapet antiretour (25) étant ouvert vers l'entrée (17) .

2. Electrovanne (10) selon la revendication 1, **caractérisée en ce que** l'induit d'entrée (11) est réalisé en forme de cône au niveau de son extrémité tournée vers l'induit de sortie (12) et **en ce que** l'induit de sortie présente à cet effet une extrémité correspondante avec un cône interne.

3. Electrovanne selon la revendication 2, **caractérisée par** au moins une bobine magnétique (14) et comprenant des branches d'étrier disposées transversalement à l'axe d'un noyau de bobine (15) de telle sorte qu'un axe de prolongement imaginaire de l'une des branches d'étrier (35) coupe l'induit de sortie (12) lorsque la première sortie (18) est fermée dans la région d'une enveloppe de cône (33).

4. Electrovanne (10) selon l'une quelconque des revendications précédentes,
**caractérisée en ce que** pour déplacer l'induit d'entrée (11) et l'induit de sortie (12), exactement une bobine magnétique (14) est prévue.

5. Electrovanne selon la revendication 1 ou selon l'une quelconque des autres revendications, **caractérisée en ce que** l'induit de sortie (12) est sollicité par ressort et, dans l'état non alimenté en courant de l'électrovanne, ferme la première sortie (18).

6. Electrovanne selon la revendication 1 ou selon l'une quelconque des autres revendications, **caractérisée en ce que** l'induit d'entrée (11) et l'induit de sortie (12) sont à chaque fois sollicités par ressort de telle sorte que sans alimentation électrique, la première sortie (18) est fermée et l'entrée (17) est ouverte, et **en ce que** lors d'une alimentation électrique complète, l'entrée (17) est fermée et la première sortie (18) est ouverte.

7. Electrovanne selon la revendication 1 ou selon l'une quelconque des autres revendications, **caractérisée par** un élément d'espacement anti-magnétique (30) entre l'induit d'entrée (11) et l'induit de sortie (12).

8. Electrovanne selon la revendication 1 ou selon l'une quelconque des autres revendications, **caractérisée par** un agencement et une réalisation d'un noyau de bobine (15), d'un induit d'entrée (11) et d'un induit de sortie (12), de telle sorte qu'il existe toujours un espace entre le noyau de bobine (15) et l'induit de sortie (12).

9. Electrovanne selon la revendication 1 ou selon l'une quelconque des autres revendications, **caractérisée par** un élément d'espacement anti-magnétique (28, 37) entre l'induit d'entrée (11) et le noyau de bobine (15).

10. Utilisation de l'électrovanne selon l'une quelconque des revendications précédentes 1 à 9, en tant que soupape de commande pour une soupape-relais ABS.
